# EUROPÄISCHE PATENTSCHRIFT

(11) **EP 1 334 072 B1**
(45) Veröffentlichungstag und Bekanntmachung des Hinweises auf die Patenterteilung: **30.03.2011**
(21) Anmeldenummer: 01969752.3
(22) Anmeldetag: 21.09.2001
(51) Int. Cl.: C02F 1/28, C01G 49/02, B01J 20/06, B01D 53/26, C02F 101/20

(54) **ADSORPTIONSBEHÄLTER UND EISENOXIDADSORBER**
ADSORPTION CONTAINER AND IRON OXIDE ADSORBER
CONTENANT POUR ADSORPTION ET OXYDE DE FER ADSORBANT

(30) Priorität: 26.09.2000 DE 10047996; 26.09.2000 DE 10047997; 29.03.2001 DE 10115418; 29.03.2001 DE 10115415; 29.03.2001 DE 10115417; 29.03.2001 DE 10115414; 18.06.2001 DE 10129307; 18.06.2001 DE 10129304; 18.06.2001 DE 10129306
(43) Veröffentlichungstag der Anmeldung: 13.08.2003
(73) Patentinhaber: LANXESS Deutschland GmbH, 51369 Leverkusen (DE)
(72) Erfinder: SCHLEGEL, Andreas, 47800 Krefeld (DE); BAILLY, Peter, 51519 Odenthal (DE); KISCHKEWITZ, Jürgen, 40833 Ratingen (DE); ROHBOCK, Klaus, 47906 Kempen (DE)
(86) Internationale Anmeldenummer: PCT/EP2001/010930
(87) Internationale Veröffentlichungsnummer: WO 2002/026633

(56) Entgegenhaltungen:
- EP-A- 0 704 500
- WO-A-83/03595
- WO-A-99/50182
- DE-A- 19 824 379
- DE-A- 19 824 379
- GB-A- 258 275
- GB-A- 1 568 349
- GB-A- 1 568 349
- GB-A- 2 295 970
- US-A- 3 319 791
- US-A- 3 392 838
- US-A- 4 366 090
- US-A- 4 459 370
- US-A- 4 481 087
- US-A- 4 515 756
- US-A- 5 368 640
- US-A- 5 744 030
- PATENT ABSTRACTS OF JAPAN vol. 1996, no. 07, 31. Juli 1996 (1996-07-31) & JP 08 059244 A (TODA KOGYO CORP), 5. März 1996 (1996-03-05)

## Beschreibung

Die Erfindung betrifft von Medien durchströmbare Filtrationseinheiten zur Entfernung von Schadstoffen aus Fluiden, bestehend aus einem Kartuschengehäuse (4), welches aus einem Behälter besteht, der mittig zentriert ein Einlassrohr (6), stirnseitig gegenüberliegende Flachfilterlagen (3), (10), einen Deckel welches den Zu- (1) und Ablauf (12) des zu reinigenden Fluids gewährleistet, sowie ein Bodenteil (9) besitzt,dadurch gekennzeichnet, dass das Filterkartuschengehäuse (4) eine Schüttung von Agglomeraten von feinteiligem Eisenoxihydroxid in stückiger Form mit einer Korngröße von 0,2 bis 40mm enthält, wobei das feinteilige Eisenoxihydroxid L-FeCOH ist, das eine BET-Oberfläche von 50 bis 500 m²/g aufweist, derart, dass das zu reinigende Fluid bestimmungsgemäß den Einlaufstutzen (1), das Einlassrohr (6), den Siebkorb (7), eventuell Filtermaterial (8) im Bodenraum (9), die untere Frittenplatte (10), danach das Adsorbermaterial (5) im Kontaktraum (4), die obere Frittenplatte (3), den Deckelraum mit Filtermaterial (2) und dann über den Auslaufstutzen das Auslaufrohr (12) verlässt.

Vielfach steht man vor dem Problem, vor allem in Regionen, in denen Brunnen-Leitungs- oder allgemein Trinkwasser mit Arsen- oder sonstigen Schwermetallen belastet ist, keine geeignete Trinkwasseraufbereitungsanlage in der Nähe oder kein geeignetes Aggregat zur Hand zu haben, die die Schadstoffe kontinuierlich entfernen würden.

Filterkartuschen, zur Reinigung von Flüssigkeiten, vorzugsweise verunreinigtem Wasser, die auch ein Adsorptionsmedium enthalten können, sind in verschiedenen Ausführungen bekannt.

Zur Abtrennung von Feststoffen aus Gewässern sind z. B. Membranfilterkerzen in geeigneten Gehäusen im Einsatz.

Von der Firma Brita Wasser-Filter-Systeme GmbH sind Kartuschen und Vorrichtungen zum Aufbereiten von Flüssigkeiten bekannt (DE-A 19 905 601; DE-A 19 915 829; DE-A 19 814 008, DE-A 19 615 102, DE-A 4 304 536, US-A 6,099,728). Diese Vorrichtungen eignen sich gut zur ganz- oder teilweisen Entsalzung von Trinkwasser in Haushaltskannen unmittelbar vor dem Gebrauch des Trinkwassers.

Aus der US-A 4,064,876 ist eine als Filterpatrone ausgebildete Filtrationseinheit bekannt, die zwischen einer Polyesterurethan-Schaumstoffschicht und einer Glasfaserschicht eine Schüttung von Aktivkohlepartikeln besitzt.

In DE-A 19 816 871 (Sartorius) ist eine Filtrationseinheit zur Entfernung von Schadstoffen aus Fluiden beschrieben.

In RU-A 2 027 676 ist ein Patronenfilter mit Sorptionsmittel für die Trinkwasserreinigung mit Anschluss an den Wasserhahn in der Wohnung beschrieben.

In HU-A 00 209 500 ist eine Filterkartusche zur Entfernung von radioaktivem Material und Schwermetallen aus Wasser beschrieben, die mit einer Mischung aus Ionenaustauschermaterial, Aktivkohle, Filtersand, Zeolithen, Aluminiumoxid und Rotschlamm gefüllt ist.

Meistens sind diese Adsorberkartuschen mit Aktivkohle oder mit Ionenaustauscherharzen befüllt. Aktivkohle hat jedoch den Nachteil, dass Arsen- und Schwermetallsalze, wie sie in wässrigen Systemen vorkommen, wegen der niedrigen Adsorptionskapazität der Aktivkohle nicht in ausreichendem Umfang enfernt werden, was sich auf die Standzeit der Kartuschen auswirkt.

Ionenaustauscherharze haben den Nachteil, dass sie Ionen aus wässriger Lösung sehr unselektiv binden und es häufig zu Konkurrenzreaktionen in der Adsorption kommt. Ein weiterer Nachteil von Ionenaustauschern ist die starke Abhängigkeit der Adsorptionskapazität des Ionenaustauschers vom pH-Wert des Wassers, so dass große Mengen an Chemikalien zur pH-Einstellung des Wassers notwendig sind, was bei der Verwendung der Adsorberkartusche im Haushalt nicht praktikabel ist.

Kontakt- und Adsorber-Granulate, auch solche auf Basis von Eisenoxiden und/oder Eisenoxihydroxiden, sind bereits beschrieben worden. Sie werden überwiegend in kontinuierlichen Verfahren eingesetzt, wobei sie sich üblicherweise in turm- bzw. kolonnenartigen Apparaten befinden, die von dem zu behandelnden Medium durchströmt werden, und an der äußeren und inneren Oberfläche der Granulate finden die chemischen bzw. physikalischen Reaktions- bzw. Adsorptionsprozesse statt. Zu diesem Zweck können pulverförmige Materialien nicht eingesetzt werden weil sie sich in Fließrichtung des Mediums verdichten und dadurch den Strömungswiderstand bis zur Blockierung des Apparates erhöhen. Wird ein Apparat durch Rückspülung gereinigt (s. unten), werden große Mengen des Pulvers ausgetragen, gehen verloren bzw. führen zu einer nicht tolerierbaren Belastung des Abwassers.

Die strömenden Medien üben jedoch auch Kräfte auf die Granulate aus, die zur Abrasion und/oder zu einer Bewegung bis hin zu heftiger Agitation der Granulate führen können. Dadurch stoßen die Granulate aneinander, und infolgedessen entsteht unerwünschter Abrieb. Dieser führt zu Verlust von Kontakt- bzw. Adsorbermaterial und Verunreinigung des zu behandelnden Mediums.

Bei der Gasreinigung wird das Mittel in Adsorbern für die Bindung unerwünschter Bestandteile wie Schwefelwasserstoff, Mercaptanen und Blausäure, sowie sonstiger Phosphor-, Arsen-, Antimon-, Schwefel-, Selen-, Tellur-, sowie Cyano- und Schwermetallverbindungen in Abgasen eingesetzt. Es ist auch möglich, Gase wie HF, HCl, H₂S, SOₓ, NOₓ zu adsorbieren.

Eine Filterkartusche zur Trocknung von Gasen ist z. B. in US-A 5,110,330 beschrieben.

Möglich ist auch die Entfernung von Phosphor-, Arsen-, Antimon-, Selen-, Tellur-, sowie Cyano- und Schwermetallverbindungen aus Altölen und sonstigen kontaminierten organischen Lösungsmitteln.

Es sind verschiedenartige Verfahren bekannt, um mit Hilfe von Adsorptionsmitteln die Spuren- und Schadstoffe aus wässrigen Systemen zu entfernen.

Zum Entfernen von Schadstoffen aus Wasser beschreibt die DE-A 3 800 873 ein Adsorptionsmittel auf der Basis von porösen Materialien wie zum Beispiel hydrophobierter Kreide mit feiner bis mittlerer Körnung.

In der DE-A 3 703 169 wird ein Verfahren zur Herstellung eines granulierten Filterstoffes zum Aufbereiten von Naturwasser offenbart. Das Adsorbens wird durch Granulierung einer wässrigen Suspension von Kaolin unter Zugabe von pulverförmigem Dolomit in einer Wirbelschicht hergestellt. Anschließend werden die Granalien bei 900 bis 950° C gebrannt.

Aus der DE-A 40 34 417 ist ein Verfahren zur Herstellung und Verwendung von hochreaktiven Reagenzien für die Abgas- und Abwasserreinigung bekannt. Beschrieben werden hier Gemische aus Ca(OH)₂ mit Zusätzen von Tonen, Steinmehlen, Flugstaub und Flugaschen, die porös hergestellt werden und eine Oberfläche von ca. 200 m²/g besitzen.

Die genannten Verfahren bzw. die hierzu eingesetzten Kontakte haben den gemeinsame Nachteil, dass die jeweilige für die selektive Adsorption von Inhaltsstoffen der zu reinigenden Medien verantwortliche Komponente, also das eigentliche Adsorbens, mit hohen Mengen an Zuschlagstoffen versetzt werden muss, um eine Formgebung zu Granulaten zuzulassen. Hierdurch erniedrigt sich in deutlichem Maße die Bindekapazität für die zu entfernenden Wasserschadstoffe. Außerdem ist die spätere Aufarbeitung bzw. Weiterverwertung des Materials problematisch, da die als Bindemittel eingesetzten Fremdstoffe erst wieder abgetrennt werden müssen.

In der DE-A 4 214 487 werden ein Verfahren und ein Reaktor zum Entfernen von Verunreinigungen aus Wasser beschrieben. Ein trichterförmiger Reaktor, in dem als Sorbens für Wasserverunreinigungen fein verteiltes Eisenhydroxid in flockiger Form eingesetzt wird, wird horizontal durchströmt. Nachteilig bei diesem Verfahren ist der Einsatz des flockenförmigen Eisenhydroxids, der aufgrund der geringen Dichteunterschiede zwischen Wasser und Eisenhydroxid dazu führt, dass ein derartiger Reaktor nur mit sehr geringen Strömungsgeschwindigkeiten betrieben werden kann und die Gefahr besteht, dass das Sorbens, gegebenenfalls bereits mit Schadstoffen beladen, gemeinsam mit dem Wasser aus dem Reaktor ausgetragen wird.

In der DE-A 4 320 003 wird ein Verfahren zum Entfernen von gelöstem Arsen aus Grundwasser mittels kolloidem oder granuliertem Eisenhydroxid beschrieben. Für die Verwendung von feinen, suspendierten Eisen(III)hydroxid-Produkten wird hier empfohlen, die Eisenhydroxid-Suspension in Festbettfilter, die mit gekörntem Material oder anderen Trägern mit hoher äußerer oder innerer Porosität gefüllt sind, einzubringen. Auch dieses Verfahren bringt den Nachteil mit sich, dass, bezogen auf das Adsorbens "Substrat + Eisenhydroxid", nur geringe spezifische Beladungskapazitäten erreichbar sind. Außerdem besteht nur eine schwache Bindung zwischen Substrat und Eisenhydroxid, so dass bei einer anschließenden Behandlung mit arsenhaltigem Wasser die Gefahr des Austrags von Eisenhydroxid bzw. Eisenarsenat besteht. In dieser Druckschrift wird weiterhin der Einsatz von granuliertem Eisenhydroxid als Adsorbermaterial für einen Festbettreaktor genannt. Die Herstellung des granulierten Eisenhydroxids erfolgt über eine Gefrier-Konditionierung (Gefriertrocknung) von durch Neutralisation von sauren Eisen(III)salz-Lösungen erhaltenem Eisenhydroxid bei Temperaturen unter minus 5° C. Dieser Herstellungsprozess ist in hohem Maße energieaufwendig und führt zu stark salzbelasteten Abwässern. Außerdem werden als Ergebnis dieses Herstellungsprozesses lediglich sehr kleine Körnchen mit geringer mechanischer Stabilität erhalten. Dies führt bei einem Einsatz in einem Festbettreaktor dazu, dass sich das Kornspektrum durch mechanische Abrasion der Teilchen im Verlaufe des Betriebs deutlich verringert, was wiederum zu Folge hat, dass feindisperse Partikel von beladenem oder unbeladenem Adsorptionsmittel aus dem Reaktor ausgetragen werden. Ein weiterer Nachteil dieser Granulate ist, dass die Adsorptionsfähigkeit gegenüber Arsenverbindungen erheblich vermindert wird, wenn die Granulate, z.B. durch längere Trockenstandzeit, Wasser verlieren.

Zur Wasseraufbereitung werden bevorzugt kontinuierlich betriebene Adsorber eingesetzt, die häufig in Gruppen parallel angeordnet betrieben werden. Um beispielsweise Trinkwasser von organischen Verunreinigungen zu befreien, werden derartige Adsorber mit Aktivkohle beschickt. Zu Spitzenverbrauchszeiten werden dann die vorhandenen Adsorber parallel betrieben, um die Strömungsgeschwindigkeit nicht über das auslegungsbedingte Maximum hinaus ansteigen zu lassen. Während Zeiten niedrigeren Wasserverbrauchs werden einzelne Adsorber aus dem Betrieb genommen und können währenddessen beispielsweise gewartet werden, wobei das Adsorbermaterial besonderen Belastungen ausgesetzt ist, wie weiter unten näher ausgeführt wird.

Der vorliegenden Erfindung lag nur die Aufgabe zugrunde, eine Filtrationseinheit zur Entfernung von Arsen- und Schwermetallen aus Trink-, Brauch,- Mineral-, Gartenteich-, Agrar-, Weih- und Heilwasser unter Verwendung von Eisenoxihydroxid als. Adsorptions/Reaktionsmittel bereitzustellen, die durch die Adsorberleistung des Füllmediums eine hohe Entfernung der gelösten Schadstoffe gewährleisten, welche zugleich den mechanischen und hydraulischen Beanspruchungen in den Adsorbergehäusen standhält und zusätzlich zur Sicherheit durch die Filtrationsleistung eingebauter Filter den Austrag suspendierter Verunreinigungen oder abgeriebener, möglichweise mit Schadsoffen beladenen Adsorberteilen verhindern.

Die erfindungsgemäßen Filtrationseinheiten lösen diese komplexe Aufgabe.

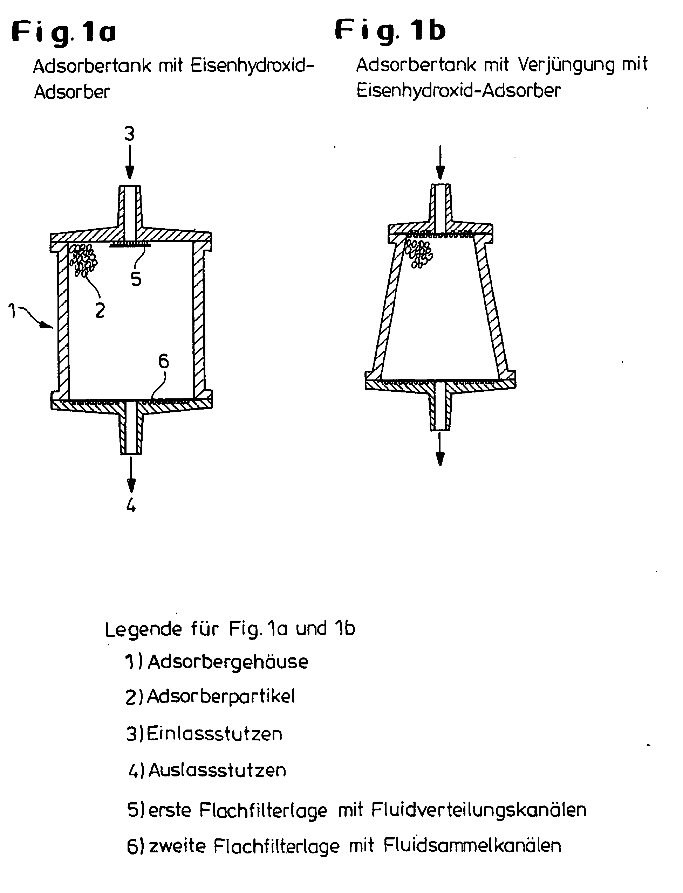

Die Aufgabe wird durch eine Filtrationseinheit gelöst, die aus einem Gehäuse aus Kunststoff, Holz, Glas, Keramik, Metall oder einem Verbundwerkstoff besteht, welches mit Einlass- und Auslassöffnungen versehen ist. Beispielhafte einfache Ausführungsformen zeigen die Abbildungen Fig. 1a und Fig. 1b. Diese Gehäuse sind in DE-A 19 816 871 ausführlich beschrieben. Die Einlass- und Auslassöffnungen sind vom eigentlichen Gehäuseraum, der eine Schüttung des Eisenoxihydroxid-Adsorptionsmediums enthält, durch sie überdeckende Flachfilteranlagen getrennt. Das zu behandelnde Fluid passiert somit nacheinander die erste Flachfilterlage, die Adsorberpartikel, die zweite Flachfilterlage und die Auslassöffnung. Der Gehäuseraum kann dabei vollständig oder teilweise mit den Adsorberpartikeln gefüllt sein. Der Gehäuseraum ist vorzugsweise kegel- oder pyramidenartig, kann aber auch zylindrisch, kugelförmig, quaderförmig oder schlangenlinienartig gewunden beschaffen sein. Durch eine Verjüngung des Gehäuseraumes (siehe Abbildung Fig. 1b) kann z. B. erreicht werden, dass die Filtration in jeder beliebigen Lage betrieben werden kann und kein Bypass zwischen der Schüttung der Adsorberpartikel ausgebildet werden kann, den das zu filtrierende Fluid ohne Adsorption ungehindert passieren kann. Durch die Füllung des Gehäuseraumes mit einer Schüttung der Adsorberpartikel, die zwischen 97 und 99 % des Gehäusevolumens einnimmt, ist ein hoher Durchfluss des zu reinigenden Fluids gewährleistet, da durch die Stabilität der Adsorbergranulate der zuströmenden Flüssigkeit ein geringer Widerstand entgegengesetzt wird.

In bevorzugten Ausführungsformen der Erfindung ist der Gehäuseraum in den sich verjüngenden Abschnitten als Kegelstumpf oder als Pyramidenstumpf ausgebildet.

Für die Flachfilterlagen sind je nach Anwendungsgebiet z. B. in DE-A 19 816 871 verschiedene Materialien aufgezeigt.

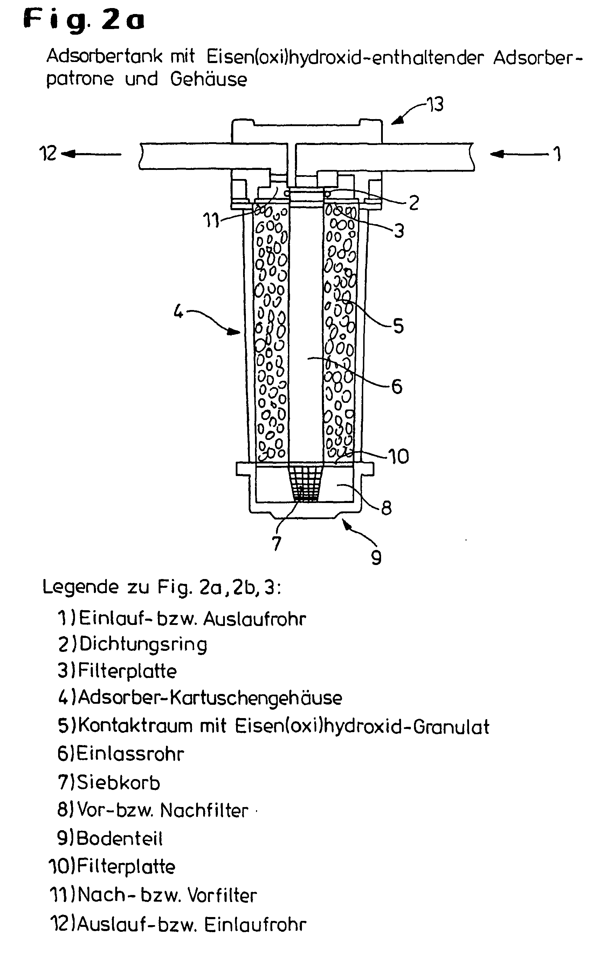

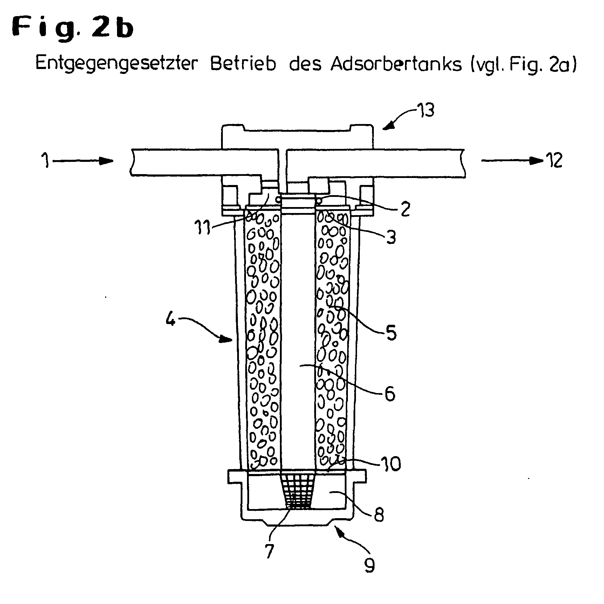

Eine verbesserte Ausführungsform eines Adsorbertanks zeigt Abbildung Fig. 2a bzw. Fig. 2b. Sie zeigen das Haushaltsfiltermodul jeweils im Längsschnitt.

Das Adsorbergehäuse (4) mit dem Eisenoxihxdroxid-Adsorbermaterial (5) mit stirnseitig oben (3) und unten (10) angeordneten Filterplatten und zentral angeordnetem Einlassrohr (6) kann als Einheit durch eine Verschraubung mit dem Deckel (13) am oberen Ende und einer Verschraubung mit dem Bodenaufsatz (9) am unteren Ende durch Lösen der Verschraubungen isoliert werden. Ist die Kartusche beladen, kann man eine neue einsetzen und Boden- und Deckelplatte reinigen. Am oberen Ende ist das Einlassrohr (6) über einen geeignete Dichtungsring mit dem Einlaufstutzen (2) während des Gebrauchs fest verbunden. Das Einlassrohr kann aus dem Kartuschengehäuse entfernt werden und in ein neues, frisches Kartuschengehäuse eingesetzt werden. Dadurch strömt die eintretende Flüssigkeit direkt auf einen Siebkorb (7) zu, welches suspendierte Schwebstoffe, Algen und dergleichen vorfiltriert und diese am Eintritt in die eigentliche Adsorberkartusche zurückhält, so dass das Adsorbermaterial nicht verbäckt oder verklebt. Das Sieb (7) dient zur gleichmäßigen verteilung des eintretenden Flüssigkeitsstroms in den Bodenraum, ist daher vorzugsweise konisch, d. h. kegelstumpfartig und umschließt das Einlassrohr ganz und ist sowohl mit diesem als auch mit der sie umgebenden Filterplatte (10) über lose Dichtungsringe fixiert. Das Gewebe des Siebes kann aus gängigen feinmaschigen Filtermaterialien, z. B. aus Kunststoff, Naturstoff oder Metall bestehen.

Das angeschraubte Bodenteil (9) kann zusätzlich ein geeignetes Filtermaterial oder Filterfliess (8) beinhalten, das man je nach Art und Menge der zu erwartenden Schwebstoffe auswählen kann. Bei großen Mengen an festen Fremdstoffen kann man das Sieb (7) und das Filterfließ (8) durch Abschrauben des Bodenteils leicht entfernen und reinigen. Die Filterplatte (10), die aus feinporiger Keramik bestehen kann, trennt den Bodenraum (9) vom Kontaktraum mit den Eisenoxihydroxid-Granulaten (5), so dass kein Adsorbermaterial in den Bodenraum und kein vorfiltriertes Material in den Kontaktraum gelangt. Indem das zu reinigende Wasser den Kontaktraum mit dem Eisenoxihydroxid-Adsorber von unten nach oben aufsteigend passiert, werden die zu entfernenden Schadstoffe durch Physi- und/oder Chemisorption am Adsorbermaterial entfernt. Eine zusätzliche Filterplatte am oberen Ende des Kartuschengehäuses sorgt dafür, dass kein Adsorbermaterial in den Auslass (12) gelangt. Durch erhöhten Wasserdruck oder durch lange Standzeit des Adsorbertanks kann sich vom Adsorbermaterial Feinanteil abreiben, der die Filterplatte (3) passiert. Um zu vermeiden, dass dieser (mit Schadstoffen beladene) Feinanteil in den Auslass gelangt, ist im Inneren des Deckels (13) Filtermaterial oder Filterfliess (11) eingebettet, welches den Feinanteil zurückhält.

Die Filterlagen (3) und (10) dienen auch dazu, das Fluid auf den Adsorberraum (5) gleichmäßig zu verteilen bzw. nach Austritt aus diesem wieder zu sammeln.

Das saubere, von Fremd- und Schadstoffen gereinigte Wasser verlässt den Adsorbertank über den Auslaufstutzen (12).

Der Deckel (13) kann zusätzlich ein Ventil besitzen, um die beim erstmaligen Betrieb während des Betriebes mitgeförderte Gase (z. B. im Kartuschengehäuse enthaltene Luft) entweichen zu lassen.

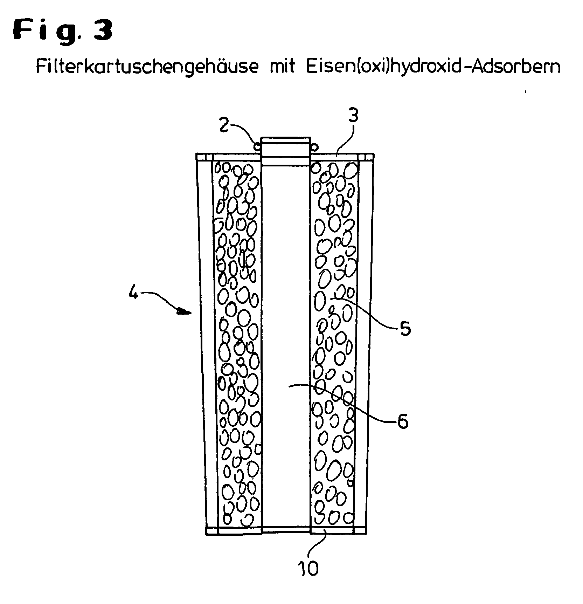

Je nach Anwendung kann es vorteilhaft sein, den eben beschriebenen Adsorbertank in umgekehrter Reihenfolge zu betreiben (Abb. 2b). Das heisst, das zu reinigende Wasser tritt nun vom Einlaufstutzen (1) direkt auf den Vorfilter (11) durch den Schwebstoffe und Fremdkörper zurückgehalten werden, passiert dann die Filterplatte (3), tritt in den Kontaktraum, wo die Adsorption der gelösten Schadstoffe am Adsorbermaterial vonstatten geht, tritt über die Kartuschenbodenplatte (10) in den Bodenraum (9), wo eventuell Filtermaterial (8) eingebettet ist, um abgeriebenes Adsorbermaterial zurückzuhalten, wobei der Siebkorb (7) zusätzliche Filtrationsdienste leistet, so dass das gereinigte Wasser über das Auslassrohr (6) und den Auslaufstutzen den Adsorbertank über die Öffnung (1) verlässt. Abbildung Fig. 3 zeigt den Einsatz (Kartusche, Filterpatrone) alleine.

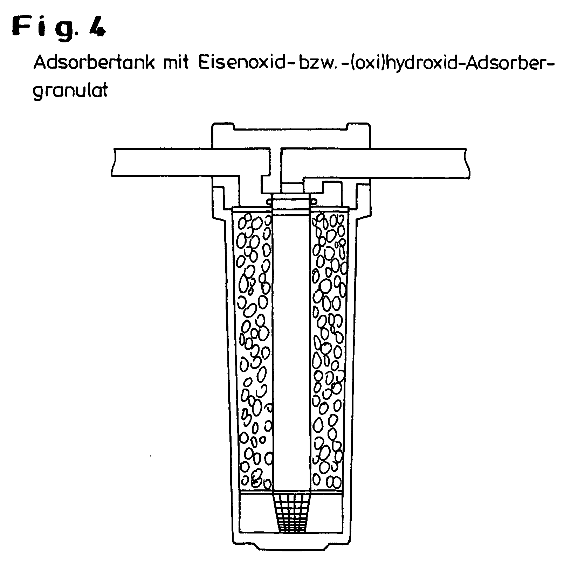

Eine einfachere Ausführungsform, die jedoch nach dem selben Prinzip arbeitet wie oben beschrieben, zeigt Abbildung Fig. 4. Sie zeigt den Adsorbertank, der die erfmdungsgemäßen Adsorbergranulate enthält, und bei dem die Adsorberkartusche eine Einheit bildet.

Prinzipiell sind natürlich weitere Ausführungsformen und Designs möglich, die dem beschriebenen Aufbauten ähnlich sind und die nach den beschriebenen Weisen arbeiten, d. h. eine Einlass- und Auslassöffnung für Gewässer und Eisen(oxi)hydroxid- als Adsorbermedien enthalten.

Die Herstellung des einzusetzenden Agglomerate kann beispielsweise so erfolgen, dass teiligen Eisenoxihydroxiden der Phase α-FeOOH herstellt indem Eisen (4) -hydroxyde aus entsprechenden Eisen (4) - salzlösungen in einem Überschuss von Natronlange gefällt und anschließend oxidiert werden, und dann das wasser und darin gelöste ßestandteite auf zwei verschiedene weisen entfernt.

### Methode 1:

Für Anwendungen, bei denen geringere Ansprüche an die mechanische Festigkeit der Granulate/Kontakte gestellt werden, entfernt man zunächst nur das Wasser, z.B. durch Verdampfung. Man erhält einen Rückstand, der neben dem feinteiligen Eisenoxid und/oder -hydroxid auch die gesamte Salzfracht enthält. Dieser Rückstand wird nach dem Trocknen in Wasser redispergiert, wozu nur relativ wenig Scherkraft angewendet werden muss. Diese Suspension wird anschließend filtriert und der Rückstand wird im wesentlichen salzfrei gewaschen. Der Filterkuchen, den man als Rückstand erhält, ist eine feste bis halbfeste Paste, die in der Regel einen Wassergehalt zwischen 10 und 90 Gew.-% besitzt.

Diese kann anschließend ganz oder teilweise entwässert werden, und das so erhaltene Material kann anschließend in die gewünschte Form und/oder Größe zerkleinert werden. Alternativ kann die Paste bzw. der Filterkuchen, gegebenenfalls nach einer Vortrocknung zur Erlangung eines dazu ausreichend festen Zustands, einer Formgebung und anschließenden (weiteren) Trocknung unter Erlangung eines stückigen Zustandes unterzogen werden. Die spätere Anwendung des Granulats bestimmt die bevorzugte Vorgehensweise bei seiner Herstellung und ist für den Fachmann auf dem jeweiligen Anwendungsgebiet durch einfache orientierende Vorversuche bestimmbar. Sowohl der unmittelbar getrocknete Filterkuchen als auch die getrockneten Formkörper können dann als Kontakt bzw. Adsorber eingesetzt werden.

### Methode 2:

Für Anwendungen, bei denen höhere Ansprüche an die mechanische Festigkeit der Granulate/Kontakte gestellt werden, wird die Suspension filtriert und der Rückstand im wesentlichen salzfrei gewaschen. Der Filterkuchen, den man als Rückstand erhält, ist eine feste bis halbfeste Paste. Diese kann anschließend ganz oder teilweise entwässert werden, und das so erhaltene Material kann anschließend in die gewünschte Form und/oder Größe zerkleinert werden. Alternativ kann die Paste bzw. der Filterkuchen, gegebenenfalls nach einer Vortrocknung zur Erlangung eines dazu ausreichend festen Zustands, einer Formgebung und anschließenden (weiteren) Trocknung unter Erlangung eines stückigen Zustandes unterzogen werden. Die spätere Anwendung des Granulats bestimmt die bevorzugte Vorgehensweise bei seiner Herstellung und ist für den Fachmann auf dem jeweiligen Anwendungsgebiet durch einfache orientierende Vorversuche bestimmbar. Sowohl der unmittelbar getrocknete Filterkuchen als auch die getrockneten Formkörper können dann als Kontakt bzw. Adsorber eingesetzt werden.

Die gemäß Methode 1 erhaltenen Produkte sind zwar mechanisch weniger stabil, jedoch ist die Filtration leichter und schneller durchführbar. Außerdem können die so isolierten feinteiligen Pigmente sehr einfach in z.B. Lacke und Polymere eingearbeitet werden, weil man dazu erheblich weniger Scherkraft braucht als dies zur Einarbeitung der gemäß Methode 2 erhaltenen feinteiligen Pigmente erforderlich ist.

Das eingesetzte feinteilige E Eisenoxihydroxid hat eine Teilchengröße von bis zu 500 nm, vorzugsweise bis zu 100 nm, besonders bevorzugt 4 bis 50 nm, und eine BET-Oberfläche von 50 bis 500 m²/g, bevorzugt von 80 bis 200 m²/g.

Die Primärteilchengröße wurde aus rasterelektronenmikroskopischen Aufnahmen z. B. bei einer Vergrößerung 60000:1 durch Ausmessen bestimmt (Gerät: XL30 ESEM FEG, Fa. Philips). Sind die Primärteilchen nadelförmig, wie z. B. in der Phase von α-FeOOH, lässt sich als Mass für die Teilchengröße die Nadelbreite angeben. Man beobachtet bei nanoteiligen α-FeOOH- Teilchen Nadelbreiten von bis zu 100 nm, in der Hauptsache jedoch zwischen 4 und 50 nm. α-FeOOH Primärteilchen haben üblicherweise ein Länge:Breite-Verhältnis von 5:1 bis zu 50:1, typischerweise von 5:1 bis 20:1. Durch Dotierungen oder spezielle Reaktionsführung lassen sich die Nadelformen jedoch in ihrem Länge:Breite-Verhältnis variieren.

Nach den Methoden 1) oder 2) erhältlichen Produkte können anschließend beipielsweise durch Schroten oder Mahlen weiter zerkleinert werden. Da sich die Produkte bei ihrem ersten Kontakt mit Wasser, beispielsweise beim ersten Füllen eines frisch beschickten Adsorberapparats mit Wasser, jedoch autogen zerkleinern, wird dies in der Regel nicht erforderlich sein.

Als andere Methode, Granulate zu erzeugen, hat sich die Granulierung einer halbfeuchten Paste bewährt. Dabei formt man Pellets bzw. Stränge aus einer halbfesten Paste z. B. Mittels eines einfachen Lochblechs, einer Walzenpresse oder eines Extruders und trocknet diese entweder gleich oder bringt diese Extrudate mittels eines Sphäronizers zusätzlich in eine Kugel- oder Granulatform. Die noch feuchten Kügelchen bzw. granulate können im Nachhinein auf einen beliebigen Feuchtigkeitsgehalt nachgetrocknet werden. Damit die Granulate nicht zusammenbacken, empfiehlt sich ein Restfeuchtegehalt von < 50 %. Eine solche Kugelform kann für den Einsatz in Festbettadsorbern wegen der dadurch besseren Schüttung im Adsorberbehälter gegenüber geschroteten Granulaten oder Pellets in Strangform von Vorteil sein.

Generell ist es möglich, zur Verbesserung des Filtrationsverhaltens der Suspensionen übliche filtrationsverbessernde Maßnahmen anzuwenden wie sie z.B. in Solid-Liquid Filtration and Separation Technology, A. Rushton, A.S., Ward R.G., Holdich, 2. Aufl. 2000, Wiley-VCH, Weinheim sowie Handbuch der Industiellen Fest/Flüssig-Filtration, H. Gasper, D. Öchsle, E. Pongratz, 2. Aufl. 2000, Wiley-VCH Weinheim beschrieben sind. So können den Suspensionen zum Beispiel Flockungsmittel zugesetzt werden.

Neben der Eisenoxihydroxiden können auch Eisencarbonate verwendet werden.

Die Agglomerate können einer Trocknung an Luft, und/oder im Vakuuin, und/oder im Trockenschrank und/oder auf Bandtrocknern oder durch Sprühtrocknung, bevorzugt bei Temperaturen von -25 bis 250° C, besonders bevorzugt bei 60 bis 120° C, unterzogen werden.

Die Agglomerate haben vorzugsweise einen Restwassergehalt von weniger als 20 Gew.-%.

Es wurde gefunden, dass die so erhaltenen Stücke bzw. Granulate eine hohe Bindekapazität für in Gewässern, Flüssigkeiten oder Gasen enthaltene Schadstoffe besitzen und sie zudem eine ausreichend hohe Stabilität gegenüber durch strömende Medien hinsichtlich mechanischer oder hydraulischer Beanspruchung besitzen.

Insbesondere überrascht, dass sich feinteilige Eisenoxihydroxide mit hohen spezifischen Oberflächen beim Trocknen in sehr harte Agglomerate verfestigen, die ohne Zusatz von Bindemittel eine hohe mechanische Abriebsfestigkeit und eine hohe hydraulische Stabilität gegenüber dem Kontakt mit durchströmenden Wasser besitzen, und die ein hohes Bindevermögen Für die in dem Wasser enthaltenen Schad- und Spurenstoffe haben.

Zum erfindungsgemäßen Einsatz von feinteiligen Eisenoxihydroxiden eignen sich z.B. transparente Eisenoxihydroxidpigmente mit spezifischen Oberflächen von mehr als 80 m².

Die Herstellung von gelben feinteiligen Eisenoxihydroxidpigmenten (Goethit) im sauren oder alkalischen pH-Bereich, sogenannte saure bzw. alkalische Keime, ist Stand der Technik. Auch die Herstellung von anderen feinteiligen Eisenoxid- bzw. Eisenoxihydroxidpigmenten ist Stand der Technik.

Die Herstellung transparenter Eisenoxihydroxide ist z.B. gemäß DE-A 2 603 050 aus BIOS 1144, S. 29 bis 33 oder aus FIAT 814, S. 1 bis 26 bekannt.

Feinteilige gelbe Eisenoxihydroxidpigmente werden in der Regel durch Fällung von Eisen-(II)-hydroxiden oder -carbonaten aus entsprechenden Eisen(II)-salzlösungen wie z. B. FeSO₄, FeCl₂ in Reinform oder als Beizereilösungen im sauren oder alkalischen pH-Bereich und anschließender Oxidation zu Eisen(III)-oxihydroxiden synthetisiert (s. u. a. G. Buxbaum, Industrial Inorganic Pigments, VCH Weinheim, 2. Auflage, 1998, S. 231ff). Die Oxidation des zweiwertigen zum dreiwertigen Eisen erfolgt bevorzugt mit Luft, dabei ist eine intensive Begasung von Vorteil. Auch die Oxidation mit H₂O₂ führt zu feinteiligen Eisenoxihydroxiden. Die Temperatur bei der Fällung und bei der Oxidation sollte möglichst tief gewählt werden, um zu sehr feinteiligen Gelbpigmenten zu gelangen. Sie liegt vorzugsweise zwischen 15° C und 45° C. Als alkalisches Fällungsmittel wird bevorzugt NaOH eingesetzt. Aber auch andere Fällungsmittel, wie KOH, Na₂CO₃, K₂CO₃, CaO, Ca(OH)₂, CaCO₃, NH₃, NH₄OH, MgO und/ oder MgCO₃ können verwendet werden.

Um die gefällten Pigmente in Richtung der notwendigen hohen Feinteiligkeit zu steuern, werden die Fällungen, z. B. von gelbem α-FeOOH, wie in den Patenten US-A 2 558 303 und US-A 2 558 304 beschrieben, im alkalischen pH-Bereich mit Alkalicarbonaten als Fällungsmittel durchgeführt und in der Regel Modifikatoren zugesetzt, wie z.B. SiO₂, Zink-, Aluminium- oder Magnesiumsalze, Hydroxicarbonsäuren, Phosphate, Metaphosphate. So hergestellte Produkte sind in US-A 2 558 302 beschrieben. Derartige Keimmodifikatoren stören behindern die spätere Aufarbeitung, Rezyclierung oder weitere andersartige Verwendung der erfindungsgemäßen Adsorbentien nicht. Bei den Fällverfahren im wässrigen Medium führen nach bisherigem Wissen Fällungen im alkalischen Milieu zu weniger hart agglomerierten Pulvern als solche im sauren.

DE-A 4 235 945 berichtet über die Darstellung feinteiliger Eisenoxide nach einem Fällverfahren im sauren pH-Bereich und ohne Modifikatoren.

DE-A 4 434 969 beschreibt ein Verfahren, mit dem hochtransparente gelbe, chemisch reine Eisenoxidpigmente durch Nachbehandlung derselben mit Natronlauge hergestellt werden können.

In der DE-A 4 434 972 wird über hochtransparente, gelbe Eisenoxidpigmente der α-FeOOH-Modifikation mit einer spezifischen Oberfläche von mehr als 100 m²/g mit hoher Temperaturstabilität berichtet.

DE-A 4 434 973 beschreibt hochtransparente gelbe Eisenoxidpigmente, die über die Verfahrensschritte Keimfällung im sauren pH-Bereich, Keimoxidation, Keimreifung und Pigmentaufbau hergestellt werden.

Dadurch, dass das Eisenoxihydroxid durch die bekannten Fällungs- und Oxidationsreaktionen aus Eisen(II)-salzlösungen hergestellt werden, das entstandene Eisenoxihydroxid, gegebenenfalls nach einer Nachbehandlung, aus der Suspension durch Filtration von der Salzlösung abgetrennt und weitgehend salzfrei, vorzugsweise bis zu einer Restleitfähigkeit von <5 mS/cm, gewaschen wird, der feste oder halbfeste Filterkuchen so wie er ist, oder gegebenenfalls nach einer mechanischen Formgebung, anschließend einer Trocknung unter Erlangung eines festen Zustandes unterzogen wird, erhält man ein mechanisch hochfestes Material, welches eine hohe Bindekapazität für die üblicherweise in Abwässern oder Abgasen enthaltenen Schadstoffe aufweist.

Die Trocknung erfolgt zweckmäßig bei Temperaturen bis zu 250° C. Auch eine Vakuum- oder Gefriertrocknung des Materials ist möglich. Die Korngröße des Materials ist beliebig, sie liegt vorzugsweise zwischen 0,2 und 40 mm, besonders bevorzugt zwischen 0,2 bis 20 mm. Diese kann erreicht werden durch mechanische Formgebung des halbfesten, pastösen Filterkuchens vor der Trocknung durch eine Granulier-oder Pelletieranlage oder in einer Strangpresse zu Formkörpern mit einer Größe im Bereich zwischen 0,2 und 20 mm und anschließender Trocknung an der Luft, auf einem Bandtrockner oder in einem Trockenschrank, und/oder durch mechanisches Zerkleinern auf die gewünschte Korngröße nach der Trocknung.

Gegenüber dem Stand der Technik handelt es sich bei den beschriebenen Filtrationseinheiten, um eine Verbesserung. Die Granulate auf Basis feinteiliger Eisen(oxi)hydroxide und/oder -oxide sind im Gegensatz zu solchen aus grobteiligen Eisenoxihydroxiden und/oder -oxiden erheblich belastbarer und weisen somit eine viel größere Abriebsstabilität gegenüber mechanischer und hydraulischer Beanspruchung auf. Sie können direkt als solche eingesetzt werden. Selbst auf das Zerkleinern oder Schroten der zunächst erhaltenen rohen Trockensubstanz aus Filterkuchen oder Strangpressen kann z.B. bei der Anwendung in Adsorberanlagen zur Wasserreinigung verzichtet werden, da sich die groben Stücke bei ihrem Kontakt mit Wasser selbständig zerkleinern. Hierbei entsteht eine statistische Korngrößenverteilung, jedoch keine Partikel einer Größe, die in nennenswertem Maße durch das strömende Medium aus dem Adsorber ausgetragen werden.

Auf eine separate Granulierung, wie sie beim Einsatz herkömmlicher Eisenoxihydroxiden in Form (rieselfähiger) Pulver erforderlich wäre, entweder unter Zuhilfenahme substanzfremder Bindmittel oder höchster Linienkräfte beim Kompaktieren, kann völlig verzichtet werden.

Besonders bevorzugt werden die Agglomerate bzw Filtrationseinheiter bei der Reinigung von Flüssigkeiten, insbesondere zur Entfernung von Schwermetallen, eingesetzt. Eine in diesem technischen Gebiet bevorzugte Anwendung ist die Dekontamination von Wasser, insbesondere von Trinkwasser. In jüngster Zeit wird der Entfernung von Arsen aus Trinkwasser besondere Aufmerksamkeit gewidmet. Die erfindungsgemäβen Granulate eignen sich hierzu hervorragend, da selbst die niedrigen von der US-Behörde EPA festgesetzten Grenzwerte durch die Verwendung der erfindungsgemäβen Granulate nicht nur eingehalten, sondern sogar unterschritten werden können.

Da zur Trinkwasser aufzubereitendes Rohwasser üblicherweise auch organische Verunreinigungen wie Algen und ähnliche Organismen enthält, belegt sich die Oberfläche von Adsorbern, insbesondere die äußere Oberfläche von granulatförmigem Adsorbens, während des Einsatzes mit zumeist schleimigen Ablagerungen, die den Zutritt des Wassers und damit die Adsorption von zu entfernenden Inhaltsstoffen erschweren oder gar verhindern. Aus diesem Grund werden die Adsorber-Apparate von Zeit zu Zeit mit Wasser rückgespült, was vorzugsweise während Zeiten niedrigen Wasserverbrauchs (s. oben) an einzelnen aus dem Betrieb genommenen Apparaten durchgeführt wird. Hierbei wird das Adsorbens aufgewirbelt, und durch die hiermit verbundene mechanische Beanspruchung der Oberfläche wird der unerwünschte Belag entfernt und entgegen der Fließrichtung im Nutzbetrieb ausgetragen. Das Waschwasser wird üblicherweise einer Kläranlage zugeführt. Hierbei bewähren sich die erfindungsgemäßen Adsorbentien ganz besonders gut, da deren hohe Festigkeit eine Reinigung in kurzer Zeit ermöglicht, ohne dass nennenswerte Verluste an Adsorbermaterial zu verzeichnen wären bzw. das dem Abwasser zugeführte Rückspülwasser reich an ausgetragenem Adsorbermaterial, gegebenenfalls schon hoch mit Schwermetallen beladen, ist.

Durch einen geeignete Vor- und Nachfilter werden die Verunreinigungen, die die Adsorberkartusche verstopfen könnten, zurückgehalten.

Durch die Stabilität der Agglomerate und durch geeignete Packung der Adsorbergranulate ist der Materialabrieb minimiert.

Da die eingesetzten- Agglomerate frei von artfremden Bindmitteln sind, ist das Material nach Gebrauch vergleichsweise einfach zu entsorgen. So kann das adsorbierte Arsen z.B. in speziellen Apparaturen thermisch oder chemisch entfernt werden, und man erhält als reinen Stoff ein Eisenoxidpigment, welches entweder zum Zweck der gleichen Anwendung rezycliert oder herkömmlichen Pigmentanwendungen zugeführt werden kann. Je nach Anwendung und gesetzlichen Bestimmungen kann der Adsorberinhalt auch ohne die vorherige Entfernung der Schwermetalle beispielsweise als Pigment zur Einfärbung dauerhafter Konstruktionsmaterialien wie Beton verwendet werden, da die dem Trinkwasser entzogenen Schwermetallen auf diese Weise dauerhaft immobilisiert und dem Wasserkreislauf entzogen werden.

Für viele Anwendungen, insbesondere solchen, bei denen eine maximale mechanische Festigkeit der Granulen nicht erforderlich ist, ist der Zusatz von pulverförmigen Pigmenten bei der Herstellung der Granulate eine bevorzugte Ausführungsform.

So kann beispielsweise eine Keimsuspension nach Beispiel 2 der vorliegenden Anmeldung mit bis zu 40 Gew.-% handelsüblichen Goethits (z. B. Bayferrox^{®} 920, Bayer AG, Leverkusen DE) versetzt werden, wenn die erhaltenen erfindungsgemäßen Granulate zur Entfernung von Arsen aus Trinkwasser in von Wasser durchströmten Filtrationseinheiten eingesetzt werden sollen.

Die Bestimmung der spezifischen Oberfläche der erfindungsgemäßen Produkte nach BET erfolgt über das Trägergasverfahren (He:N₂=90:10) nach der Einpunkt-Methode, gemäß DIN 66131 (1993). Vor der Messung wird die Probe 1 h bei 140 °C im trockenen Stickstoffstrom ausgeheizt.

Zur Messung der Adsorption von Arsen(III) und Arsen(V) werden in einer 5L PE-Flasche über einen bestimmten Zeitraum 3L einer wässrigen Lösung von NaAsO₂ oder Na₂HAsO₄ mit der jeweils angegebenen Konzentration von ca. 2-3 mg/L Arsen mit 3 g der zu untersuchenden Probe behandelt und dabei die Flasche auf rotierenden Walzen in Bewegung versetzt. Die Adsorptionsgeschwindigkeit von As-Ionen auf Eisenhydroxid über diesen bestimmten Zeitraum, z.B. eine Stunde, wird angegeben mit mg(As^{3+/5+})/g(FeOOH).h aus der Differenz zu den in Lösung verbleibenden As^{3+/5+}-Ionen.

Zur Messung der Adsorption von Sb³⁺, Sb⁵⁺, Pb²⁺, Hg²⁺, Cr⁶⁺, Cd²⁺-Ionen verfährt man nach dem gleichen Muster, und zwar stellt man sich die gewünschten Konzentrationen durch Auflösen entsprechender Mengen von Sb₂O₃, KSb(OH)₆, PbCl₂, NaCrO₄, CdCl₂ in H₂O her und stellt den pH-Wert auf 7-9 ein.

Die As-, Sb-, Cd-, Cr-, Hg- bzw. Pb-Gehalte des beladenen Eisenoxihydroxids bzw. der Lösungen bestimmt man über die Massenspektrometrie (ICP-MS) gemäß DIN 38406-29 (1999) oder über optische Emissionsspektroskopie (ICP-OES) gemäß EN-ISO 11885 (1998) mit jeweils induktiv gekoppeltem Plasma als Anregungseinheit.

Die Beurteilung der mechanischen und hydraulischen Abriebsfestigkeit erfolgte nach folgender Methode: 10 g des zu untersuchenden Granulats mit Korngrößen >0.1 mm wurden in einem 500 mL Erlenmeyerkolben mit 150 mL VE-Wasser versetzt und auf einer Schüttelmaschine LabShaker (Modell Kühner, Fa. Braun) über einen Zeitraum von 30 Minuten mit 250 Umdrehungen/Minute in Rotation versetzt. Anschließend wurde von der Suspension mittels eines Siebs der Anteil >0.1 mm isoliert, getrocknet und gewogen. Das Gewichtsverhältnis zwischen Auswaage und Einwaage bestimmt den Abriebswert in %.

Die Erfindung wird im Folgenden anhand von Beispielen näher erläutert. Die Beispiele sollen der Illustration des Verfahrens dienen und stellen keine Einschränkung dar.

### Beispiele

### Beispiel 1:

237 L einer wässrigen Eisensulfatlösung mit einer Konzentration von 150 g/L FeSO₄ wurden bei 24 °C vorgelegt. Sodann wurden 113 L einer wässrigen NaOH-Lösung (227 g/L) rasch zugegeben und die hellblaue Suspension anschließend mit 40 L Luft pro Stunde und Mol Eisen über 1.5 Stunden oxidiert.

Die so erhaltene gelbe Suspension wurde über eine Filterpresse abfiltriert und der Feststoff bis zu einer Restleitfähigkeit des Filtrats von 1 mS/cm gewaschen. Dabei fiel der Filterkuchen als streich- und knetbare Paste an, welche auf Blechen im Umlufttrockenschrank bei 75° C bis zu einem Restfeuchtegehalt von 3 Gew.-% getrocknet wurde. Das getrocknete Material wurde anschließend durch Schrotung auf Teilchengrößen zwischen 0.5 und 2 mm gebracht. Die so erhaltenen harten Stücke wurden direkt in einem Adsorbertank eingesetzt.

Das Produkt bestand zu 100 % aus α-FeOOH mit extrem kurznadeligem Habitus, wobei die Nadeln zu festen makroskopischen Agglomeraten zusammengelagert waren. Aus der rasterelektronenmikroskopischen Aufnahme z. B. mit der Vergrößerung von 60000:1 wurde die Nadelbreiten durch Ausmessen zwischen 15 und 35 nm, die Nadellängen zwischen 150 und 350 nm bestimmt. Die Nadeln waren stark agglomeriert.

Die spezifische Oberfläche nach BET betrug 122 m²/g. Die Adsorptionsgeschwindigkeit bezüglich NaAsO₂ mit einer Ausgangskonzentration von 2.3 mg (As³⁺)/L betrug 2.14 mg(As³⁺)/g(FeOOH)·h, bezüglich Na₂HAsO₄ mit einer Ausgangskonzentration von 2.7 mg (As⁵⁺)/L betrug sie 2.29 mg(As⁵⁺)/g(FeOOH)·h.

### Beispiel 2:

800 L einer wässrigen Eisensulfatlösung mit einer Konzentration von 150 g/L FeSO₄ wurden bei 29° C vorgelegt und unter Rühren mit 147 L einer wässrigen NaOH-Lösung (300 g/L) in 20 Minuten versetzt. Die entstandene grau-blaue Suspension wurde anschließend mit 2.16 kg einer 57 %-igen wässrigen Glycolsäurelösung versetzt und 7 Stunden mit 38 L Luft je Stunde und Mol Eisen oxidiert.

Die dunkelbraune Suspension wurde über eine Filterpresse abfiltriert und der Feststoffbis zu einer Restleitfähigkeit des Filtrats von 1 mS/cm gewaschen. Der Filterkuchen wurde bei 70 °C im Umlufttrockenschrank bis zu einer Restfeuchte von 5 % getrocknet, und das sehr harte schwarzbraune Trockengut wurde über einen Walzenbrecher zu Korngrößen bis 2 mm geschrotet. Der Feinanteil < 0.2 mm wurde über ein Sieb abgetrennt.

Das Produkt bestand laut Röntgendiffraktogramm aus 100 % α-FeOOHAus der rasterelektronenmikroskopischen Aufnahme z. B. mit der Vergrößerung von 60000:1 wurde die Nadelbreiten durch Ausmessen zwischen 15 und 20 nm, die Nadellängen zwischen 50 und 80 nm bestimmt. Die Teilchen waren stark agglomeriert. Die spezifische Oberfläche nach BET betrug 202 m²/g. Die so erhaltenen Granulate wurden direkt ohne weitere Behandlung in einen Adsorbertank gefüllt.

Die Granulate zeigten ein ausgezeichnetes Adsorptionsverhalten für die in dem durchströmenden Wasser enthaltenen Schadstoffe und zeigten eine hohe Abriebsfestigkeit, insbesondere während der Adsorbertank rückgespült wird und infolgedessen die Granulate stark aufgewirbelt werden. Der Abriebswert betrug nach 30 Minuten lediglich 1 %.

Adsorptionsverhalten: Die Adsorptionsgeschwindigkeit gegenüber NaAsO₂ betrug mit einer Ausgangskonzentration von 2.4 mg (As³⁺)/L 1.0 mg(As³⁺)/g(FeOOH)·h, gegenüber Na₂HAsO₄ mit einer Ausgangskonzentration von 2.8 mg (As⁵⁺)/L betrug sie 2.07 mg(As³⁺)/g(FeOOH)·h.

### Beispiel 3:

Eine nach Beispiel 2 erhaltene α-FeOOH-Suspension wurde nach zweistündiger Reifung bei 30° C unter Rühren mit 1.3 L einer wässrigen 300 g/L NaOH-Lösung versetzt und gleichzeitig mit 190 L Luft eine Stunde nachoxidiert. Das Produkt wurde wie im Beispiel 2 beschrieben aufgearbeitet. Es entstanden feinteilige Nadeln aus reinem α-FeOOH mit einer spezifischen Oberfläche nach BET von 130 m²/g. Aus der rasterelektronenmikroskopischen Aufnahme z. B. mit der Vergrößerung von 60000:1 wurde die Nadelbreiten durch Ausmessen zwischen 15 und 20 nm, die Nadellängen zwischen 50 und 90 nm bestimmt. Die Nadeln waren stark agglomeriert. Die Granulate erwiesen sich als mechanisch und hydraulisch sehr stabil, der Abriebswert betrug lediglich 3.9 %.

Adsorptionsverhalten: Die Adsorptionsgeschwindigkeit gegenüber NaAsO₂ mit einer Ausgangskonzentration von 2.3 mg (As³⁺)/L betrug 1.1 mg(As³⁺)/g(FeOOH)·h, gegenüber Na₂HAsO₄ mit einer Ausgangskonzentration von 2.8 mg (As⁵⁺)/L betrug sie 1.7 mg(As³⁺/g(FeOOH)·h.

### Beispiel 4:

306 L einer wässrigen NaOH-Lösung (45 g/L) wurden bei 31° C vorgelegt und unter Rühren rasch mit 43 L einer wässrigen Lösung von FeCl₂ (344 g/L) versetzt und anschließend mit 60 L Luft je Stunde und Mol Fe oxidiert. Die so erhaltene dunkelgelbe Suspension wurde wie in Beispiel 1 beschrieben aufgearbeitet.

Das Produkt bestand laut Röntgendiffraktogramm zu 100 % aus α-FeOOH. Aus der rasterelektronenmikroskopischen Aufnahme z. B. mit der Vergrößerung von 60000:1 wurde die Nadelbreiten durch Ausmessen zwischen 15 und 50 nm, die Nadellängen zwischen 100 und 200 nm bestimmt. Die Nadeln waren stark agglomeriert. Die spezifische Oberfläche nach BET betrug 132 m²/g.

Die so erhaltenen Granulate wurden ohne weitere Behandlung in einen Adsorbertank gefüllt Die Granulate zeigten ein ausgezeichnetes Adsorptionsverhalten für die im Wasser enthaltenen Schadstoffe und zeigten eine hohe Abriebsfestigkeit, insbesondere während der Adsorbertank rückgespült wird und infolgedessen die Granulate stark aufgewirbelt werden. Der Abriebswert betrug nach 30 Minuten lediglich 12 Gew.-%.

Adsorptionsverhalten: Die Adsorptionsgeschwindigkeit gegenüber NaAsO₂ mit einer Ausgangskonzentration von 2.4 mg (As³⁺)/L betrug 2.11 mg(As³⁺/g(FeOOH)·h, gegenüber Na₂HAsO₄ mit einer Ausgangskonzentration von 2.7 mg (As⁵⁺)/L betrug sie 2.03 mg(As^{s}l/g(FeOOH)·h.

### Beispiel 5

Es wurden 4096 kg NaOH (als Lösung mit ca. 300 g/L) vorgelegt und mit Wasser auf 40 m³ verdünnt. 4950 kg FeSO₄ werden mit Wasser zu 48.5 m³ Lösung gelöst, auf 15 °C abgekühlt und anschließend in 1 h zu der NaOH-Vorlage gepumpt. Die Suspension wurde dann mit 1500 m³/h Luft in ca. 2 h oxidiert. Ca. 2 m³ der Keimsuspension wurde auf einer Filterpresse bis zu einer Filtratleitfähigkeit < 1000 µS/cm gewaschen, der Filterkuchen bei 75 °C im Trockenschrank getrocknet und das getrocknete Material auf Korngrößen < 1.5 mm geschrotet. Der Feinanteil < 0.5 mm wurde über ein Sieb abgetrennt. Das so erhaltene Material hatte eine spezifische Oberfläche nach BET von 153 m²/g und bestand zu 100 % aus α-FeOOH. Aus der rasterelektronenmikroskopischen Aufnahme z. B. mit der Vergrößerung von 60000:1 wurde die Nadelbreiten durch Ausmessen zwischen 15 und 35 nm, die Nadellängen zwischen 50 und 100 nm bestimmt. Die Nadeln waren stark agglomeriert.

Adsorptionsverhalten: Die Adsorptionsgeschwindigkeit bezüglich NaAsO₂ mit einer Ausgangskonzentration von 2.7 mg (As³⁺)/L betrug 1.7 mg(As³⁺)/g(Fe00M·h, bezüglich Na₂HAsO₄ mit einer Ausgangskonzentration von 2.8 mg (As⁵⁺)/L betrug sie 1.4 mg(As⁵⁺/g(FeOOH)·h.

### Beispiel 6

1600 g der nach Beispiel 5 dargestellten alkalischen Keimsuspension (2.7 % FeOOH) wurden bei Raumtemperatur unter Rühren mit einer wässrigen Lösung von FeSO₄ (100 g/L) bei gleichzeitiger Begasung mit 130 L/h Luft bis pH 8 versetzt. Die erhaltene Keimsuspension wird filtriert, gewaschen und der Filterkuchen bei 75 °C getrocknet und wie im Beispiel 5 auf Korngrößen zwischen 0,5 und 2 mm geschrotet. Das so erhaltene Material hatte eine spezifische Oberfläche nach BET von 163 m²/g und bestand laut Röntgendiffraktogramnn zu 100 % aus α-FeOOH. Aus der rasterelektronenmikroskopischen Aufnahme z. B. mit der Vergrößerung von 60000:1 war zu sehen, dass die Nadeln stark agglomeriert sind. Adsorptionsverhalten: Die Adsorptionsgeschwindigkeit bezüglich NaAsO₂ mit einer Ausgangskonzentration von 2.7 mg (As³⁺)/L betrug 2.0 mg(As³⁺)/g(FeOOH)·h, bezüglich Na₂HAsO₄ mit einer Ausgangskonzentration von 2.7 mg (As⁵⁺)/L betrug sie 1.9 mg(As⁵⁺)/g(FeOOH)·h, bei KSb(OH)₆ (Ausgangskonzentration 3.0 mg (Sb⁵⁺)/L) betrug die Adsorption 2.5 mg (Sb⁵⁺)/g (FeOOH)·h, bezüglich Na₂CrO₄ (Ausgangskonzentration 47 µg (Cr⁶⁺)/L) wurden 42 µg (Cr⁶⁺)/g(FeOOH)·h adsorbiert, bei PbCl₂ (Ausgangskonzentration 0.94 mg (Pb²⁺)/L wurden 0.46 mg (Pb²⁺)/ g(FeOOH)·h adsorbiert.

### Beispiel 7

6.4 L einer wässrigen Lösung von NaOH (100 g/L) wurden bei 29 °C unter Rühren vorgelegt und bei gleichzeitiger Luftzufuhr mit 12.2 L einer wässrigen Eisen (II)sulfat-lösung (100 g/L) bis pH 9 versetzt. Die so erhaltene Suspension wurde wie im Beispiel 1 aufgearbeitet. Das Material hatte eine spezifische Oberfläche nach BET von 251 m²/g und bestand laut Röntgendiffraktogramm zu 100 % aus α-FeOOH. In der rasterelektronenmikroskopischen Aufnahme sind kurze, stummelige Nadeln zu erkennen, die stark agglomerieren. Abriebsverhalten: 5 %.

Adsorptionsverhalten: Die Adsorptionsgeschwindigkeit bezüglich NaAsO₂ mit einer Ausgangskonzentration von 2.7 mg (As³⁺)/L betrug 1.1 mg(As³⁺)/g(FeOOH)·h, bezüglich Na₂HAsO₄ mit einer Ausgangskonzentration von 2.7 mg (As³⁺)/L betrug sie 1.0 mg(As⁵⁺)/g(FeOOH)·h.

### Beispiel 8

Es wurden 3100 kg NaOH (als Lösung mit 100 g/L,) in einem Rührkessel vorgelegt und mit kaltem Wasser auf 31 m³ verdünnt. Die Temperatur dieser NaOH-Lösung betrug 26 °C.

3800 kg FeSO₄ werden mit Wasser zu 38 m³ Lösung gelöst, auf 13-14 °C abgekühlt und anschließend unter Rühren in 40 min zu der NaOH-Vorlage gepumpt. Die entstehende Suspension wurde dann unter Rühren mit 2500 m³/h Luft in 75 min oxidiert.

Anschliessend gibt man 18,2 m³ einer FeSO₄-Lösung (100 g/L) in 150 L/min unter Begasung mit 1300 m³/h Luft unter Rühren zu.

Die Keimsuspension wurde auf einer Filterpresse bis zu einer Filtratleitfähigkeit < 1 mS/cm gewaschen, die Filterpaste durch ein Lochblech gedrückt und auf einem Bandtrockner bis zu einer Restfeuchte von < 20 Gew.-% getrocknet. Das so getrocknete Material wurde auf Korngrößen < 2 mm geschrotet. Der Feinanteil < 0.5 mm wurde über ein Sieb abgetrennt.

Das Produkt bestand laut Röntgendifraktogramm aus 100 % α-FeOOH. Aus der rasterelektronenmikroskopischen Aufnahme z. B. mit der Vergrößerung von 60000:1 wurde die Nadelbreiten durch Ausmessen zwischen 15 und 35 nm, die Nadellängen zwischen 50 und 300 nm bestimmt. Die Teilchen waren stark agglomeriert. Die spezifische Oberfläche nach BET betrug 145 m²/g. Der Abriebswert betrug nach 30 min lediglich 5,1 Gew. -%.

### Ausführungsbeispiel 9

Nach Beispielen 1-18 dargestellte Adsorbergranulate, typischerweise zwischen 0,5 und 2 mm oder in zerkleinerter Form werden in einen gemäß Abb. 1 oder 2 dargestellten Kontaktraum eingelagert. Die Filtrationseinheit weist einen Durchfluss für Luft als Fluid von 2000 mL pro Minute bei einer Druckdifferenz von 0.1 bar auf.

## Patentansprüche

1. Von Medien durchströmbare Filtrationseinheiten zur Entfernung von Schadstoffen aus Fluiden, bestehend aus einem Kartuschengehäuse (4), welches aus einem Behälter besteht, der mittig zentriert ein Einlassrohr (6), stirnseitig gegenüberliegende Flachfilterlagen (3), (10), einen Deckel welches den Zu- (1) und Ablauf (12) des zu reinigenden Fluids gewährleistet, sowie ein Bodenteil (9) besitzt,**dadurch gekennzeichnet, dass** das Filterkartuschengehäuse (4) eine Schüttung von Agglomeraten von feinteiligem Eisenoxihydroxid in stückiger Form mit einer iKorngröße von 0,2 bis 40 mm enthält, wobei das feinteilige Eisenoxihydroxid - FeOOH ist, das eine BET-Oberfläche von 50 bis 500 m²/g aufweist, derart, dass das zu reinigende Fluid bestimmungsgemäß den Einlaufstutzen (1), das Einlassrohr (6), den Siebkorb (7), eventuell Filtermaterial (8) im Bodenraum (9), die untere Frittenplatte (10), danach das Adsorbermaterial (5) im Kontaktraum (4), die obere Frittenplatte (3), den Deckelraum mit Filtermaterial (2) und dann über den Auslaufstutzen das Auslaufrohr (12) verlässt.

2. Filtrationseinheit nach Anspruch 1, **dadurch gekennzeichnet, dass** der Gehäuseraum (4) vom Deckel (13)und/oder vom Bodenteil (9) durch eine Steck- oder Schraubverbindung abgetrennt werden kann.

3. Filtrationseinheit nach einem der Ansprunche 1 oder 2, **dadurch gekennzeichnet, dass** das Einlassrohr vom Kartuschengehäuse entfernt werden kann.

4. Filtrationseinheit nach einem der Ansprüche 1 bis 3, **dadurch gekennzeichnet, dass** die Flachfilteranlagen (3, 10) für die Entfernung von Schadstoffen aus Gasen aus hydrophoben Membranen bestehen.

5. Filtrationseinheit nach Anspruch 4, **dadurch gekennzeichnet, dass** die hydrophoben Membranen aus Polytetrafluorethylen bestehen.

6. Filtrationseinheit nach einem der Anspruche 1 bis 3, **dadurch gekennzeichnet, dass** die Flachfilteranlagen (3, 10) für die Entfernung von Schadstoffen aus wässrigen Lösungen aus hydrophilen Membranen bestehen.

7. Filtrationseinheit nach Anspruch 6, **dadurch gekennzeichnet, dass** die hydrophilen Membranen Membranadsorber darstellen.

8. Filtrationseinheit nach einem der Ansprüche 3 bis 7, **dadurch gekennzeichnet, dass** die Membranen einen Porendurchmesser im Bereich von0.2 bis 0.5 µm, vorzugsweise von 0.2 µm aufweisen

9. Filtrationseinheit nach einem der Ansprüche 1 bis 8, **dadurch gekennzeichnet, dass** wenigstens eine der Flachfilterlagen (3, 10) ein- oder beidseitig abgestützt ist.

10. Filtrationseinheit nach einem der Ansprüche 1 bis 9, **dadurch gekennzeichnet, dass** der Deckel ein Ventil für ausströmende Gase enthält.

11. Filtrationseinheit nach einem der Ansprüche 1 bis 10, **dadurch gekennzeichnet, dass** der Gehäuseraum (4) als Kegelstumpf ausgebildet ist.

12. Filtrationseinheit nach einem der Ansprüche 1 bis 11, **dadurch gekennzeichnet, dass** der Durchfluss in der in Anspruch 1 beschriebenen Weise umgekehrt verläuft.

13. Veswendung der Filtrationseinheiten nach einem der Ansprüche 1 bis 12 zw Reinigung von Flüssigheiten

14. Vewenchung nach Ansprüche 13, **dadurch gekennzeichnet dass** die Reinigung von Flüssigleiten eine Wasseraufbereitung ist.

15. Verwendung nach Anspruch 14, **dadurch gekennzeichnet dass** die Wasseraufbereitung die Entfernung von Schwermetallen, sowie Phosphor-, Antimon-, Beryllium-, Selen-, Tellur- sowie Cyanoverbindungen aus Wasserumfasst.

16. Verwendung nach Ansprüch 14, **dadurch gekennzeichnet, dass** die Wasseraufbereitung die Entfernung von Arenverbindungen aus Wasser umfasst.

## Claims

1. Filtration units through which media can flow for removing pollutants from fluids consisting of a cartridge housing (4) which consists of a container which has, centred in the middle, an inlet tube (6), flat filter layers opposite one another at the ends (3), (10), a lid which ensures the influx (1) and efflux (12) of the fluid to be purified and a bottom part (9), **characterized in that** the filter cartridge housing (4) contains a bed of agglomerates of finely divided iron oxyhydroxide in particulate form having a particle size of from 0.2 to 40 mm, the finely divided iron oxyhydroxide being α-FeOOH which has a BET surface area of 50 to 500 m²/g, such that the fluid to be purified, as required, leaves the inlet port (1), the inlet tube (6), the sieve basket (7), any filter material (8) in the bottom space (9), the lower frit plate (10), thereafter the adsorber material (5) in the contact chamber (4), the upper frit plate (3), and lid space with filter material (2) and then, via the outlet port, the outlet tube (12).

2. Filtration unit according to Claim 1, **characterized in that** the housing space (4) can be separated off from the lid (13) and/or from the bottom part (9) by a push-fit or screwed connection.

3. Filtration unit according to either of Claims 1 or 2, **characterized in that** the inlet tube can be removed from the cartridge housing.

4. Filtration unit according to one of Claims 1 to 3, **characterized in that** the flat filter layers (3, 10) for removing pollutants from gases consist of hydrophobic membranes.

5. Filtration unit according to Claim 4, **characterized in that** the hydrophobic membranes consist of polytetrafluoroethylene.

6. Filtration unit according to one of Claims 1 to 3, **characterized in that** the flat filter layers (3, 10) for removing pollutants from aqueous solutions consist of hydrophilic membranes.

7. Filtration unit according to Claim 6, **characterized in that** the hydrophilic membranes are membrane adsorbers.

8. Filtration unit according to one of Claims 3 to 7, **characterized in that** the membranes have a pore diameter in the range from 0.2 to 0.5 µm, preferably 0.2 µm.

9. Filtration unit according to one of Claims 1 to 8, **characterized in that** at least one of the flat filter layers (3, 10) is supported on one or both sides.

10. Filtration unit according to one of Claims 1 to 9, **characterized in that** the lid contains a valve for effluent gases.

11. Filtration unit according to one of Claims 1 to 10, **characterized in that** the housing space (4) is constructed as a truncated cone.

12. Filtration unit according to one of Claims 1 to 11, **characterized in that** the flow runs through in an opposite direction to the manner described in Claim 1.

13. Use of the filtration units according to one of Claims 1 to 12 for purifying liquids.

14. Use according to Claim 13, **characterized in that** the purification of liquids is a water treatment.

15. Use according to Claim 14, **characterized in that** the water treatment comprises the removal of heavy metals and phosphorus compounds, antimony compounds, beryllium compounds, selenium compounds, tellurium compounds and cyano compounds from water.

16. Use according to Claim 14, **characterized in that** the water treatment comprises the removal of arsenic compounds from water.

## Revendications

1. Unités de filtration aptes à être traversées par des fluides, destinées à éliminer des substances nocives de fluides et constituées d'un boîtier (4) de cartouche constitué d'un récipient qui possède en son centre un tube d'admission (6), des couches plates de filtre (3), (10) situées frontalement l'une en face de l'autre, un couvercle qui permet l'amenée (1) et la sortie (12) du fluide à épurer ainsi qu'une partie de fond (9), **caractérisées en ce que**
le boîtier (4) de cartouche de filtre contient des agglomérés en vrac d'oxy-hydroxyde de fer en fins grains d'une taille de 0,2 à 40 mm, l'oxy-hydroxyde de fer étant de l'α-FeOOH dont la surface BET est de 50 à 500 m²/g, de telle sorte que le fluide à épurer traverse en fonctionnement normal une tubulure d'entrée (1), le tube d'admission (6), le panier de tamis (7), éventuellement le matériau de filtration (8) prévu dans l'espace de fond (9), la plaque frittée inférieure (10), ensuite le matériau adsorbeur (5) disposé dans l'espace de contact (4), la plaque frittée supérieure (3) et l'espace de couvercle doté d'un matériau de filtration (2) avant de quitter le tube de sortie (12) par l'intermédiaire de la tubulure de sortie.

2. Unité de filtration selon la revendication 1, **caractérisée en ce que** l'espace de boîtier (4) peut être séparé du couvercle (13) et/ou de la partie de fond (9) par une liaison enfichable ou filetée.

3. Unité de filtration selon l'une des revendications 1 ou 2, **caractérisée en ce que** le tube d'admission peut être séparé du boîtier de cartouche.

4. Unité de filtration selon l'une des revendications 1 à 3, **caractérisée en ce que** les couches plates de filtre (3, 10) destinées à éliminer des substances nocives de gaz sont constituées de membranes hydrophobes.

5. Unité de filtration selon la revendication 4, **caractérisée en ce que** les membranes hydrophobes sont constituées de polytétrafluoroéthylène.

6. Unité de filtration selon l'une des revendications 1 à 3, **caractérisée en ce que** les couches plates de filtre (3, 10) destinées à éliminer les substances nocives de solution aqueuse sont constituées de membranes hydrophiles.

7. Unité de filtration selon la revendication 6, **caractérisée en ce que** les membranes hydrophiles forment des adsorbeurs en membrane.

8. Unité de filtration selon l'une des revendications 3 à 7, **caractérisée en ce que** les membranes présentent des pores d'un diamètre compris dans la plage de 0,2 à 0,5 µm et de préférence de 0,2 µm.

9. Unité de filtration selon l'une des revendications 1 à 8, **caractérisée en ce qu'**au moins l'une des couches plates de filtre (3, 10) est soutenues sur une face ou sur ses deux faces.

10. Unité de filtration selon l'une des revendications 1 à 9, **caractérisée en ce que** le couvercle présente une soupape pour les gaz sortants.

11. Unité de filtration selon l'une des revendications 1 à 10, **caractérisée en ce que** l'espace (4) du boîtier est configuré en tronc de cône.

12. Unité de filtration selon l'une des revendications 1 à 11, **caractérisée en ce que** la traversée a lieu dans le sens opposé à celui décrit dans la revendication 1.

13. Utilisation des unités de filtration selon l'une des revendications 1 à 12 pour épurer des liquides.

14. Utilisation selon la revendication 13, **caractérisée en ce que** l'épuration des liquides est un traitement d'eau.

15. Utilisation selon la revendication 14, **caractérisée en ce que** le traitement d'eau est l'élimination de métaux lourds ainsi que de composés du phosphore, de l'antimoine, du béryllium, du sélénium, du tellurium ainsi que du cyanure présents dans l'eau.

16. Utilisation selon la revendication 14, **caractérisée en ce que** le traitement d'eau comprend l'élimination de composés d'arsenic présents dans l'eau.
